# EUROPÄISCHE PATENTSCHRIFT

(11) **EP 1 528 978 B1**
(45) Veröffentlichungstag und Bekanntmachung des Hinweises auf die Patenterteilung: **02.01.2008**
(21) Anmeldenummer: 03784052.7
(22) Anmeldetag: 23.07.2003
(51) Int. Cl.: B32B 27/32, B29C 49/24

(54) **ETIKETTENFOLIE FÜR IN-MOULD-VERFAHREN**
LABEL FILM FOR IN-MOULD METHODS
FILM D'ETIQUETAGE POUR LA TECHNIQUE D'ETIQUETAGE INTRA-MOULE

(30) Priorität: 03.08.2002 DE 10235557
(43) Veröffentlichungstag der Anmeldung: 11.05.2005
(73) Patentinhaber: Treofan Germany GmbH & Co.KG, 66539 Neunkirchen (DE)
(72) Erfinder: KOCHEM, Karl-Heinz, 66539 Neunkirchen (DE); LAUER, Albert, 66450 Bexbach (DE); ROTH, Mathias, 66482 Zweibrücken (DE); TEWS, Wilfrid, 66894 Bechhofen (DE)
(74) Vertreter: Kremer, Viola
(86) Internationale Anmeldenummer: PCT/EP2003/008049
(87) Internationale Veröffentlichungsnummer: WO 2004/014650

(56) Entgegenhaltungen:
- EP-A- 0 361 280
- WO-A-02/45956
- US-A- 5 096 770

## Beschreibung

Die vorliegende Erfindung betrifft eine Polypropylenfolie mit niedriger Dichte und deren Verwendung als In-Mould-Etikett, sowie ein Verfahren zur Herstellung dieser Folien.

Etikettenfolien umfassen ein umfangreiches und technisch komplexes Gebiet. Man unterscheidet verschiedene Etikettiertechniken, welche hinsichtlich der Prozeßbedingungen verschieden sind und die an die Etikettenmaterialien unterschiedliche technische Anforderungen stellen. Allen Etikettierprozeßen ist gemeinsam, daß als Endergebnis optisch ansprechend etikettierte Behältnisse resultieren müssen, bei denen eine gute Haftung des Etiketts auf dem Behältnis gewährleistet sein muß.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist grundsätzlich in allen diesen verschiedene Etikettierverfahren möglich.

Allen In-Mould Etikettierverfahren ist gemeinsam, daß das Etikett am eigentlichen Formgebungsverfahren des Behälters teilnimmt und währenddessen appliziert wird. Hierbei kommen verschiedene Formgebungsverfahren zum Einsatz, wie beispielsweise Spritzgußverfahren, Blasformverfahren und Tiefziehverfahren.

Beim Spritzgußverfahren wird ein Etikett in die Spritzgußform eingelegt und von einem schmelzeflüssigen Kunststoff hinterspritzt. Durch die hohen Temperaturen und Drücke verbindet sich das Etikett mit dem Spritzgußteil und wird zum integralen, nicht ablösbaren Bestandteil des Spritzlings. Nach diesem Verfahren werden beispielsweise Becher und Deckel für Eiscreme- oder Margarineverpackungen hergestellt.

Hierbei werden einzelne, meist vorher bedruckte, Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die bedruckte Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis muß das Etikett faltenfrei und optisch einwandfrei auf dem Behälter haften.

Beim Spritzen liegt der Einspritzdruck in einem Bereich von 300 bis 600 bar. Die zum Einsatz kommenden Kunststoffe haben einen Schmelzflußindex von um die 40 g/10min. Die Einspritztemperaturen hängen von dem eingesetzten Kunststoff ab. In manchen Fällen wird die Form zusätzlich gekühlt, um ein Verkleben des etikettierten Spritzlings mit der Form zu vermeiden.

Beim Tiefziehen werden unorientierte dicke Kunststoffplatten, meist gegossenes PP (Polypropylen) oder PS (Polystyrol), in einer Dicke von ca. 200µm erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann. Die gute Haftung muß auch bei diesen niedrigen Verarbeitungstemperaturen gewährleistet sein. Die Verarbeitungsgeschwindigkeiten dieses Verfahrens sind niedriger als beim Spritzguß.

Auch beim Blasformen von Behältern oder Hohlkörpern ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdorn eingeführt durch den die Öffnung des Formlings ausgebildet wird. Über den Blasdorn wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Bei diesen Blasformverfahren beträgt der Druck beim Aufblasen des Schmelzeschlauchs ca. 4-15 bar und die Temperaturen sind wesentlich niedriger als beim Spritzgießen. Die Kunststoffmaterialien haben einen niedrigeren MFI als beim Spritzgießen, um einen formstabilen Schmelzeschlauch zu bilden und verhalten sich daher anders als die niederviskosen Materialien für das Spritzgießen.

Auch in diesen Blasformverfahren werden vermehrt biaxial orientierte Folien aus thermoplastischen Kunststoffen zur Etikettierung von Behältnissen beim Formen eingesetzt. Die Folien müssen hierzu ein ausgewähltes Eigenschaftsprofil aufweisen, um zu gewährleisten, daß sich die Etikettenfolie und der geblasene Formkörper glatt und blasenfrei aneinander schmiegen und sich miteinander verbinden.

Auch wenn heute Polypropylenfolien in den verschiedenen In-Mould Etikettierverfahren erfolgreich eingesetzt werden, treten noch immer Probleme auf, zu denen bisher keine befriedigende Lösung gefunden wurde. Beispielsweise kommt es manchmal zu einer Verklebung der Außenseite der Etikettenfolie mit der Form, in die das Etikett eingelegt wird und dadurch zu Störungen im Produktionsablauf. Diese Verklebung kann durch Haftung der Druckfarben an der Oberfläche der Spritzgußform im bedruckten Bereich des Etiketts oder bei nicht vollflächiger Bedruckung durch eine zu starke Haftung der unbedruckten Folienoberfläche an der Form auftreten. Die Folie klebt an der Form und wird beim Öffnen quasi zerrissen. Etikettenreste bleiben in der Form hängen und der geformte Behälter ist nicht richtig etikettiert und muß aussortiert werden.

Derartige Fehler werden zum Teil durch Verschmutzungen der Formen verursacht, die nach längeren Produktionszyklen auftreten können. Beispielsweise lagern sich auf der Oberfläche der Form Bestandteile von Druckfarben ab, welche diese Verklebungen in unerwünschter Weise begünstigen. Teilweise hängt dieses Problem mit den genauen Bedingungen bei der Formgebung zusammen. So sind Temperaturen und Einspritzdruck beim In-Mould Spritzgießen besonders hoch, so daß im Bereich des Einspritzpunkts die gesamte Folie kurzzeitig stark erwärmt und gleichzeitig durch einen hohen Einspritzdruck in diesem Bereich an die Form gedrückt wird. Durch diese Bedingungen treten vermehrt Probleme gerade in diesem Bereich durch Verkleben mit der Form auf. Die Folie reißt im Bereich des Einspritzpunktes ein, delaminiert und hängt schließlich in Fetzen teilweise an der Innenseite der Form und teilweise auf der Oberfläche des Behälters.

Im Rahmen der vorliegenden Erfindung wurde gefunden, daß diese unerwünschte Delaminierung vermehrt bei sogenannten opaken Folien auftritt, deren mechanische Festigkeit durch Vakuolen im Folieninneren schwächer ist als bei vergleichbaren transparenten oder weiß eingefärbten Ausführungsformen. Des weiteren wurde gefunden, daß gerade opake Folien mit einer besonders niedrigen Dichte den mechanischen Belastungen beim In-Mould Etikettieren nicht stand halten und besonders häufig delaminieren. Dies erscheint verständlich, da die mechanische Festigkeit der Polymermatrix schwächer wird, wenn die Dichte durch immer mehr Vakuolen weiter erniedrigt wird. Andererseits werden gerade im Etikettenbereich Folien mit niedriger Dichte von den Anwendern gefordert, da die reduzierte Dichte eine höhere Flächenausbeute und damit niedrigere Kosten bietet.

Die EP 0 715 951 beschreibt eine mehrschichtige opake Folie mit verbesserter Spleißneigung. Die Folie hat einen mindestens dreischichtigen Aufbau aus einer Basisschicht und mindestens einer auf der Basisschicht aufgebrachten Zwischenschicht und einer darauf liegenden Deckschicht. Die Basisschicht enthält zur Reduzierung der Dichte 2 bis 30 Gew.-% vakuoleninitierende Teilchen. Die Zwischenschicht enthält zusätzlich 1 bis 25 Gew.-% vakuoleninitierende Teilchen und mindestens 2 Gew.-% TiO₂. Die Folie zeichnet sich durch unterschiedliche Strukturen der Zwischen- und Basisschicht aus, wodurch ein hoher Weißgrad in Verbindung mit geringer Spleißneigung und geringem Flächengewicht erzielt wird. Diesen Folien haftet jedoch der Nachteil an, daß die vakuolenhaltige Zwischenschicht den Glanz der Folie negativ beeinflußt.

Die EP 0 321 843 beschreibt eine Folie mit verbesserter inhärenter Delaminierungsstabilität, die aus einer Basisschicht und zwei transparenten Deckschichten aufgebaut ist. Die Basisschicht enthält eine Mischung aus Polypropylen, Füllstoffen zur Erzeugung der Vakuolen und 5 bis 30 Gew.-% eines Kohlenwasserstoffharzes. Nach dieser Lehre verbessert der Zusatz von Harz die Delaminierungsstabilität der Folien. Diesen Folien haftet jedoch der Nachteil an, daß Harz eine problematische Komponente ist. Zum einen verteuert der Einsatz von Harz die Rohstoffkosten. Flüchtige Bestandteile der Harze können Ausdampfen und führen beim Herstellen der Folie oder bei der Verarbeitung zu Ablagerungen auf den Walzen. Letztlich erhöht das Harz die Blockneigung der Folie und führt zu Problemen beim Entstapeln während der Verarbeitung.

DE 39 33 695 beschreibt eine nicht siegelbare Folie aus einer Basisschicht aus Polypropylen und mindestens einer Deckschicht, die aus einem speziellen Ethylen-Propylen-Copolymeren aufgebaut ist. Dieses Copolymere zeichnet sich durch einen Ethylengehalt von 1,2 bis 2,8 Gew.-% und einen Verteilungsfaktor von >10 und eine Schmelzeenthalpie von > 80 J/g und einen Schmelzindex von 3 bis 12 g/10min (21,6N und 230°C) aus. Es ist beschrieben, daß die Eigenschaften des Copolymeren zur Verbesserung der Bedruckbarkeit und der optischen Eigenschaften in diesen engen Grenzen gehalten werden müssen.

Der vorliegenden Erfindung lag die Aufgabe zu Grunde eine opake Folie mit niedriger Dichte zur Verfügung zu stellen, welche eine bessere mechanische Stabilität beim In-Mould Etikettieren aufweisen soll. Die Folie soll im Hinblick auf eine gute Ausbeute eine erniedrigte Dichte, im allgemeinen von unter 0,7 g/cm³ haben, aber zuverlässig in den verschiedenen In-Mould-Etikettierverfahren einsetzbar sein, ohne daß es zur Delaminierung der Folie beim Öffnen der Form kommt. Im Rahmen der vorliegenden Erfindung wurde gefunden, daß hierzu die Spleißneigung der Folie reduziert bzw. die Einreißfestigkeit erhöht werden muß. Die Aufgabe ist daher auch eine Folie mit niedriger Dichte und hoher Einreißfestigkeit zur Verfügung zu stellen. Selbstverständlich müssen ansonsten die gewünschten Gebrauchseigenschaften der Folie im Hinblick auf ihre Verwendung als Etikettenfolie erhalten bleiben. So soll die Folie beispielsweise noch immer eine gute Optik, einen hohen Weißgrad, eine gute Bedruckbarkeit und eine gute Antistatik im Hinblick auf die Entstapelbarkeit etc. aufweisen.

Die der Erfindung zugrundeliegende Aufgabe wird gelöst durch eine biaxial orientierte opake Polypropylenmehrschichtfolie aus einer Basisschicht, die Polypropylen und vakuoleninitierende Füllstoffe enthält, und mindestens einer darauf angeordneten ersten Zwischenschicht und einer auf der ersten Zwischenschicht angeordneten ersten Deckschicht, wobei die Folie eine Dichte von weniger als 0,7 g/cm³ aufweist, dadurch gekennzeichnet, daß die erste Zwischenschicht im wesentlichen keine Vakuolen aufweist und die erste Deckschicht mindestens 80 Gew.% eines statistischen Propylen-Ethylen-Copolymeren enthält, welches einen Ethylengehalt von 1,2 bis 2,8 Gew.-% und einen Propylengehalt von 97,2 bis 98,8 Gew.-% und einen Schmelzpunkt im Bereich von 145 bis 160°C und eine Schmelzeenthalpie im Bereich von 80 bis 110 J/g aufweist.

Es wurde gefunden, daß die Modifikation des Deckschichtpolymeren einen Einfluß auf die Einreißfestigkeit der Folie hat. Überraschenderweise weisen vergleichbare Folien mit einer Polypropylen-Copolymerdeckschicht, deren Ethylengehalt über 3 Gew.-% und deren Schmelzpunkt unter 145°C und deren Schmelzeenthalpie unter 80 J/g liegt wesentliche geringere Einreißfestigkeiten auf. Üblicherweise werden die Etikettenfolien mit Deckschichten aus Propylencopolymeren mit einem erhöhten Ethylengehalt versehen, um eine gute und langzeitstabile Bedruckbarkeit zu gewährleisten. Diese Copolymeren mit einem Ethylengehalt zwischen 3 und 6 Gew.-% haben sich als Standard für alle Anwendungen etabliert, bei denen Bedruckbarkeit und/oder Siegelbarkeit der Folie gefordert werden.

Der Zusammenhang zwischen dem speziellen Copolymeren der Deckschicht gemäß der vorliegenden Erfindung und der Einreißfestigkeit der Folie ist wissenschaftlich nicht vollständig verstanden. Es zeigt sich aber reproduzierbar, daß die genannten Parameter des Copolymeren in diesen engen Grenzen gehalten werden müssen, um eine verbesserte Einreißfestigkeit zu erzielen. Liegt der Ethylengehalt unter 1,2 Gew.-% kommt es zu einer Beeinträchtigung der Bedruckbarkeit, da dann die Wirkung der Oberflächenbehandlung, die Vorraussetzung für eine gute Bedruckbarkeit ist, nicht mehr langzeitstabil ist. Die Oberflächenspannung fällt bei einem Ethylengehalt von unter 1,2 Gew.-% innerhalb 12 Woche um mehr als 6 mN/m ab, bei typischen Anfangswerten von ca 40 mN/m. Die Folien werden dann häufig wegen schlechter Druckfarbenhaftung reklamiert. Liegt der Ethylengehalt über 3 Gew.-% und der Schmelzpunkt unter 145°C zeigen die Folien eine gute Coronahaltbarkeit, die ausgehend von 40mN/m nach 12 Wochen immer noch bei ca. 37mN/m liegt, aber die Einreißfestigkeit ist erheblich schlechter als bei den erfindungsgemäßen Folien. Erfindungsgemäße Folie weisen Werte für die Einreißfestigkeit im Bereich von 3,0 bis 4,5 N/15mm auf. Die Erhöhung des Ethylengehaltes auf beispielsweise 4 Gew.-% und die Erniedrigung des Schmelzpunktes auf ca. 136°C verschlechtert die Einreißfestigkeit auf ca. 1,0 bis 2,5 N/15mm.

Die erfindungsgemäß eingesetzten Propylencopolymeren mit niedrigem Ethylengehalt und hohem Schmelzpunkt sind an sich bekannt. So beschreiben verschiedene Lehren den vorteilhaften Einsatz dieser Rohstoffe. Z.B. ist in EP 0 361 280 angegeben, daß dieses Material vorteilhaft als Deckschicht bei metallisierbaren Folien ist. DE 39 33 695 beschreibt verbesserte Hafteigenschaften dieser Deckschichten. Es war jedoch weder bekannt noch vorhersehbar, daß diese Copolymere als Deckschicht bei einer opaken Folie mit niedriger Dichte eine günstige Auswirkungen auf die zu niedrige Einreißfestigkeit hat.

Für die Zwecke der vorliegenden Erfindung sind Propylen-Ethylen-Copolymere mit einem Ethylengehalt von 1,2 bis 2,8 Gew.-%, insbesondere 1,5 bis 2,3 Gew.-% besonders bevorzugt. Der Schmelzpunkt liegt vorzugsweise in einem Bereich von 150 bis 155°C und die Schmelzeenthalpie vorzugsweise in einem Bereich von 90 bis 100J/g. Der Schmelzflußindex beträgt im allgemeinen 3 bis 15g/10min, vorzugsweise 3 bis 9g/10min (230°C, 21,6N DIN 53 735).

Im allgemeinen enthält die erste Deckschicht mindestens 80 Gew.-%, vorzugsweise 95 bis 100 Gew.-%, insbesondere 98 bis <100 Gew.-% des beschriebenen Copolymeren. Neben diesem Hauptbestandteil kann die Deckschicht übliche Additive wie Antiblockmittel, Gleitmittel, Antistatika, Stabilisatoren und/oder Neutralisationsmittel in jeweils wirksamen Mengen enthalten. Gegebenenfalls können geringe Mengen eines zweiten verschiedenen Propylenpolymeren enthalten sein, dessen Anteil aber vorzugsweise unter 20 Gew.-% liegt. Derartige Ausführungsformen sind nicht bevorzugt, aber denkbar falls beispielsweise Additive über Konzentrate eingearbeitet werden, die auf einem anderen Polymeren, wie z.B. Propylenhomopolymer oder andere Propylenmischpolymerisaten, beruhen.

Die Dicke dieser ersten Deckschicht liegt im allgemeinen in einem Bereich von 0,5 bis 5 µm, vorzugsweise 0,5 bis 3µm. Zur Verbesserung der Hafteigenschaften, insbesondere der Bedruckbarkeit wird die erste Deckschicht im allgemeinen in an sich bekannter Weise mittels Corona, Flamme oder Plasma einem Verfahren zur Erhöhung der Oberflächenspannung unterworfen. Typischerweise liegt dann die Oberflächenspannung der so behandelten ersten Deckschicht in einem Bereich von 35 bis 45 mN/m.

Die erfindungsgemäße Folie zeichnet sich weiterhin durch eine erniedrigte Dichte aus, welche durch Vakuolen in der Basisschicht verursacht wird, die der Folie gleichzeitig ein opakes Aussehen verleihen. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Mehrschichtfolie enthält Polyolefin, vorzugsweise ein Propylenpolymer und vakuoleninitierende Füllstoffe sowie gegebenenfalls übliche Additive in jeweils wirksamen Mengen. Im allgemeinen enthält die Basisschicht mindestens 50 Gew.-%, vorzugsweise 60 bis 95 Gew.-%, insbesondere 70 bis 98 Gew.-%, des Polyolefins, jeweils bezogen auf das Gewicht der Schicht. In einer weiteren Ausführungsform kann die Basisschicht zusätzlich Pigmente, insbesondere TiO₂ enthalten.

Als Polyolefine der Basisschicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält.

Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält vakuoleninitierende Füllstoffe in einer Menge von maximal 30 Gew.-%, vorzugsweise 5 bis 25 Gew.-%, insbesondere 8 bis 20 Gew.-%, bezogen auf das Gewicht der opaken Basisschicht.

Im Sinne der vorliegenden Erfindung sind vakuoleninizüerende Füllstoffe feste Teilchen, die mit der Polymermatrix unverträglich sind und beim Verstrecken der Folien zur Bildung von vakuolenartigen Hohlräumen führen, wobei Größe, Art und Anzahl der Vakuolen von der Menge und der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP-A-0 623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren Ausführungsform kann die Basisschicht zusätzlich Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

In einer bevorzugten Ausführungsform der Erfindung weißt nur die Basisschicht der Folie Vakuolen auf und die Basisschicht enthält keine Pigmente, wie z.B. TiO₂. Für diese Ausführungsformen korreliert die Dichte der Basisschicht eindeutig mit dem sogenannten "Schäumungsgrad" (degree of voiding) oder Hohlraumvolumen der Basisschicht, d.h. je niedriger die Dichte der Basisschicht ist, desto mehr oder größer sind die Vakuolen und desto instabiler wird die Basisschicht gegenüber einer Delaminierung. Die Gesamtdichte der Folie hängt natürlich zusätzlich noch von der Zusammensetzung der übrigen Schichten ab, so daß die Dichte der Folie insgesamt in relativ weiten Grenzen variieren kann und dennoch eine stark geschäumte Basisschicht mit niedriger Dichte vorliegt. Für diese Ausführungsformen liegt die Dichte der Basisschicht in einem Bereich von 0,35 bis 0,6 g/cm³, vorzugsweise 0,4 bis 0,5 g/cm³.

Für Ausführungsformen die zusätzlich zu den vakuoleninitierenden Teilchen Pigmente, wie z. B. TiO₂ in der Basisschicht enthalten, wird die Dichte der Folie vergleichsweise höher liegen. In diesem Fall ist die Dichte alleine kein eindeutiges Maß für den Schäumungsgrad, da trotz stark geschäumter Basisschicht die Dichte durch den Einfluß des höheren spezifischen Gewichtes des TiO₂ (Dichte 4,2 g/cm³) in einem üblichem Rahmen liegen kann. Im allgemeinen liegt die Dichte der Basisschicht für diese weiß-opaken Ausführungsformen in einem Bereich von 0,4 0,9 g/cm³, vorzugsweise 0,45 bis 0,8 g/cm³. Für diese speziellen Ausführungsformen liegt die Dichte der Folie insgesamt je nach TiO₂ Gehalt in der Basisschicht möglicherweise höher als 0,65 g/cm³ In beiden Fällen (opake und weiß-opake Basisschicht) ermöglicht die erfindungsgemäße Lehre die Delaminierungsneigung der Folie die durch eine instabile Basisschicht verursacht wird, zu verbessern, in dem man durch die ausgewählte vorstehend beschriebene Deckschicht die Einreißfestigkeit erhöht.

Erfindungsgemäß kann die Dichte der Folie für die beschriebenen weiß opaken Ausführungsformen in einem wesentlichen größeren Bereich variieren und liegt im allgemeinen in einem Bereich von 0,45 bis 0,95g/cm^{3,} vorzugsweise 0,6 bis 0,9g/cm³.

Für die bevorzugten Ausführungsformen ohne TiO₂ in der Basisschicht ist die Dichte der Folie besonders niedrig und liegt im Bereich von 0,4 bis 0,7 g/cm3, vorzugsweise 0,45 bis 0,65 g/cm3, insbesondere 0,5 bis 0,55g/cm³. Diese niedrigen Dichten bieten dem Endverbraucher eine höhere Flächenausbeute und niedrigere Kosten.

Erfindungsgemäß ist zwischen der ersten Deckschicht und der Basisschicht eine erste Zwischenschicht angebracht, d.h. eine Oberfläche dieser Zwischenschicht ist mit der Basisschicht verbunden und die zweite gegenüberliegende Oberfläche ist mit der Deckschicht verbunden.

Diese Zwischenschicht der Mehrschichtfolie enthält im allgemeinen ein Polyolefin, vorzugsweise ein Propylenpolymer und im wesentlichen keine vakuoleninitierenden Füllstoffe, aber gegebenenfalls weitere Additive in jeweils wirksamen Mengen sowie gegebenenfalls Pigmente wie TiO₂. Im allgemeinen enthält die erste Zwischenschicht mindestens 85 Gew.-%, vorzugsweise 90 bis <100 Gew.-%, insbesondere 95 bis <100 Gew.-%, des Polyolefins, jeweils bezogen auf das Gewicht der Schicht. Aufgrund dieser Struktur beträgt die Dichte der ersten Zwischenschicht mindestens 0,9 g/cm³und liegt für TiO₂-modifizierte Ausführungen im Bereich von 0,95 bis 1,2 g/cm³.

Als Polyolefine für die erste Zwischenschicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 0,5 bis 8 g/10 min, vorzugsweise 2 bis 5 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

In einer bevorzugten Ausführungsform enthält die erste Zwischenschicht Pigmente in einer Menge von maximal 15 Gew.-%, vorzugsweise 1 bis 10 Gew.-%, insbesondere 2 bis 8 Gew.-%, bezogen auf das Gewicht der ersten Zwischenschicht.

Geeignete Pigmente sind im Einzelnen bereits im Zusammenhang mit der Basisschicht beschrieben. Diese können auch in der ersten Zwischenschicht eingesetzt werden. Auch für diese Zwischenschicht ist TiO₂ als Pigment bevorzugt. Die Dicke der ersten Zwischenschicht beträgt im allgemeinen 1 bis 15 µm, vorzugsweise 1 bis 10µm.

Die Gesamtdicke der Folie liegt im allgemeinen in einem Bereich von 20 bis 120µm, vorzugsweise 30 bis 100µm, insbesondere 50 bis 90µm.

In einer bevorzugten Ausführungsform weißt die Folie, die aus mindestens drei Schichten aufgebaut ist, noch weitere Schichten auf. Besonders vorteilhaft sind vier- und fünfschichtige Ausführungsformen, die auf der gegenüberliegenden Seite der Basisschicht eine zweite Deckschicht (vierschichtige Folien) oder zusätzlich eine zweite Zwischenschicht und eine darauf aufgebrachte zweite Deckschicht aufweisen (fünfschichtige Folien).

Die zweite Deckschicht enthält im allgemeinen mindestens 80 Gew.-%, vorzugsweise 90 bis <100 Gew.% polyolefinische Polymere oder Mischungen daraus. Geeignete Polyolefine sind beispielsweise Polyethylene, Propylenhomopolymere (wie für die Basisschicht beschrieben), Propylencopolymere und/oder Propylenterpolymere.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-, 1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C.

Im Hinblick auf die Verwendung der Folie als In-Mould Etikettenfolie ist für die zweite Deckschicht eine Mischung aus den beschriebenen Propylen-Co- und/oder Terpolymeren und den genannten Polyethylenen besonders bevorzugt. Diese Deckschichtmischungen sind vorteilhaft zur Erzeugung einer Oberflächenrauheit, die beim Spritzguß- oder Blasformprozeß eine blasenfrei Applikation und die Haftung des Etiketts günstig beeinflußt. Hierfür sind HDPE und/oder MDPE haltige. Deckschichtmischungen mit einem HDPE oder MDPE Anteil von 10 bis 50 Gew.-%, insbesondere 15 bis 40 Gew.-% besonders vorteilhaft.

Die zweite Zwischenschicht kann hinsichtlich der Polymere und der Additive grundsätzlich wie die beschriebene Basisschicht eine vakuolenhaltige Polypropylenschicht mit Füllstoffen sein. Die zweite Zwischenschicht kann auch wie die beschriebene erste vakuolenfreie Zwischenschicht oder wie die beschriebene zweite Deckschicht aufgebaut sein, wobei auch Ausführungsformen mit HDPE oder MDPE haltigen Mischungen zur Unterstützung der Rauheit denkbar sind. Im allgemeinen wird der zweiten Zwischenschicht kein TiO₂ zugesetzt. Da diese Seite bei der erfindungsgemäßen Verwendung als Etikettenfolie dem Behältnis zugewandt ist bringt der Zusatz von TiO₂ in dieser Schicht keine Vorteile. Die Dicke dieser zweiten Zwischenschicht beträgt 1 bis 15 µm, vorzugsweise 2 bis 10µm.

In einer weiteren Ausführungsform der Erfindung kann die Folie auf der Oberfläche der ersten Deckschicht metallisiert werden. Hierbei können die üblichen Verfahren, wie thermische Verdampfung, Sputtern, Elektronenstrahlbedampfung und ähnliche eingesetzt werden. Vorzugsweise wird nach einem der genannten Verfahren eine Aluminiumschicht, beispielsweise in einer Dicke von 10 bis 200 nm, aufgebracht. Diese Ausführungsformen zeichnen sich durch eine besonderen metallischen Glanz aus, der für hochwertige Etikettenanwendungen besonders wünschenswert sein kann.

Um bestimmte Eigenschaften der erfindungsgemäßen Polyolefinfolie noch weiter zu verbessern, können sowohl die Basisschicht, die Zwischenschicht/en als auch die Deckschicht/en weitere Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind und bevorzugt in der oder den Deckschichten eingesetzt werden. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.%. Des weiteren wird Glycerinmonostearat in einer Menge von 0,03 % bis 0,2 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm²/s. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phe-nolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

Die Erfindung betrifft weiterhin ein Verfahren zur Herstellung der erfindungsgemäßen Mehrschichtfolie nach dem an sich bekannten Coextrusionsverfahren, wobei insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die vakuoleninitierenden Füllstoffe und andere gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100°C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m, insbesondere 39 bis 40mN/m:

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230°C gemessen.

### Lichtdurchlässigkeit

Die Lichtdurchlässigkeit wird in Anlehnung an ASTM-D 1003-77 gemessen.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° (oder 60° bei matten Oberflächen) eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Opazität und Weißgrad

Die Bestimmung der Opazität und des Weißgrads erfolgt mit Hilfe des elektronischen Remissionsphotometer. Die Opazität wird nach DIN 53 146 bestimmt. Der Weißgrad wird als WG = RY + 3 RZ - 3 RX definiert, wobei WG der Weißgrad ist, RY, RZ, RX sind entsprechende Reflexionsfaktoren bei Einsatz der Y-, Z-, und X-Farbmeßfilter. Als Weißstandard wird ein Preßling aus Bariumsulfat (DIN 5033 Teil 9) verwendet. Eine ausführliche Beschreibung ist z.B. in Hansl Loos "Farbmessungen", Verlag Beruf und Schule, Itzehoe (1989) beschrieben

### Bestimmung des Ethylengehalts

Der Ethylengehalt der Copolymeren wird mittels ¹³C-NMR Spektroskopie bestimmt. Die Messungen wurden mit einem Kemresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyltetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkt und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Dichte

Die Dichte wird nach DIN 53 479, Verfahren A, bestimmt.

### Einreißfestigkeit

Zur Bestimmung der Einreißfestigkeit wird die Folie mit ihrer erfindungsgemäßen Deckschicht gegen eine transparente siegelfähige Verpackungsfolie (Typ Trespaphan GND 30) gesiegelt. Hierbei werden zwei 15mm breite Folienstreifen übereinandergelegt und bei einer Temperatur von 130°C und einer Siegelzeit von 0,5 sec und einem Siegeldruck von 10 N/cm2 in einem Siegelgerät HSG/ETK der Firma Brugger gesiegelt. Anschließend werden die beiden Streifen nach der T-Peel Methode auseinander gezogen. Hierbei wird in üblicher Weise das Kraft-Weg Diagramm beim Peelen gemessen. Als Einreißfestigkeit wird die maximale Kraft vor dem Einreißen der gesiegelten Probe angegeben.

### Oberflächenspannung

Die Oberflächenspannung wurde mittels Tintenmethode nach DIN 53 364 bestimmt.

Die Erfindung wird nunmehr durch die nachfolgenden Beispiele erläutert.

### Beispiel 1

Nach dem Coextrusionsverfahren wurde aus einer Breitschlitzdüse bei einer Extrusionstemperatur von 240 bis 250°C °C eine fünfschichtige Vorfolie extrudiert.

Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der ersten Deckschicht wurde mittels Corona zur Erhöhung der Oberflächenspannung vorbehandelt. Die fünfschichtige Folie hatte einen Schichtaufbau erste Deckschicht/erste Zwischenschicht/Basisschichtlzweite Zwischenschicht/zweite Deckschicht. Die einzelnen Schichten der Folie hatten die folgende Zusammensetzung:

| Erste Deckschicht (1,0 µm): | |
|---|---|
| 100 Gew.-% | Ethylen-Propylencopolymerisat mit einem Ethylen-Anteil von 1,7 Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzeenthalpie von 96,9 J/g |

| Erste Zwischenschicht (4µm): | |
|---|---|
| 100 Gew.-% | Propylenhomopolymerisat (PP) mit einem n-heptanlöslichen Anteil von 4,5 Gew.-% (bezogen auf 100 % PP) und einem Schmelzpunkt von 165 °C; einem Schmelzflußindex von 3,2 g/10 min bei 230 °C und 2,16 kg Belastung (DIN 53 735) |

| Basisschicht | |
|---|---|
| 86,6Gew.-% | Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735) und |
| 10 Gew.-% | Calciumcarbonat mit einem mittleren Teilchendurchmesser von 3,5 µm |
| 3 Gew.-% | Titandioxid mit einem mittleren Teilchendurchmesser von 0,1 bis 0,3 µm |
| 0,2 Gew.-% | tertiäres aliphatische Amin als Antistatikum (Armostat 300) |
| 0,2 Gew.-% | Erucasäureamid als Gleitmittel (ESA) |

| Zweite Zwischenschicht (4µm) | |
|---|---|
| 100 Gew.-% | Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735) |

| Zweite Deckschicht (3µm): | |
|---|---|
| 65 Gew.-% | Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g |
| 34,8 Gew.-% | Polyethylen mit einer Dichte von 0,93 g/cm³ und einem Schmelzflußindex (190°C und 50 N) 0,8 g/10min |
| 0,2 Gew.-% | Antiblockmittel mit einem mittleren Teilchendurchmesser ca. 4µm (Sylobloc 45) |

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt wurden:

| | |
|---|---|
| Extrusion: | Extrusionstemperatur ca. 245 °C |
| Abkühlwalze: | Temperatur 25°C, |
| Längsstreckung: | T = 105 °C |
| Längsstreckung um den | Faktor 5 |
| Querstreckung: | T = 149 °C |
| Querstreckung um den | Faktor 9 |
| Fixierung | T = 143°C |

Die Folie wurde auf der Oberfläche der ersten Deckschicht mittels Corona oberflächenbehandelt und wies eine Oberflächenspannung von 38mN/m auf. Die Folie hatte eine Dicke von 60 µm.

### Beispiel 2

Es wurde eine Folie nach Beispiel 1 hergestellt. Im Unterschied zu Beispiel 1 enthielt die erste Deckschicht zusätzlich 0,1Gew.-% Antiblockmittel (Sylobloc 45). Der Gehalt an Propylencopolymer in der Deckschicht wurde entsprechend reduziert.

### Vergleichsbeispiel 1

Es wurde eine Folie wie in Beispiel 1 beschrieben hergestellt. Im Unterschied zu Beispiel 2 wurde die-Zusammensetzung der ersten Deckschicht geändert. Die erste Deckschicht enthielt jetzt 99,9 Gew.-% eines statistischen Propylen-Ethylen-Copolymeren mit einem Ethylen-Anteil von 4 Gew.-% (bezogen auf das Copolymer), einem Schmelzpunkt von 136°C; einem Schmelzflußindex von 7,3 g/10 min bei 230 °C und 2,16 kg Belastung (DIN 53 735) und einer Schmelzenthalpie von 64,7 J/g.

### Vergleichsbeispiel 2

Es wurde eine Folie wie in Beispiel 1 beschrieben hergestellt. Im Unterschied zu Beispiel 1 wurde die Zusammensetzung der ersten Deckschicht geändert. Die erste Deckschicht enthielt jetzt Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735).

Die Eigenschaften der Folien nach den Beispielen und den Vergleichsbeispielen sind in der Tabelle 1 zusammengestellt. Es zeigt sich, daß die erfindungsgemäßen Folien nach den Beispielen 1 und 2 hervorragende Einreißfestigkeiten und gleichzeitig alle wesentlichen Eigenschaften für die Verwendung der Folie als In-Mould-Etikett aufweisen, insbesondere eine hohe und langzeitstabile Oberflächenspannung.

**Tabelle 1**

| Beispiel | | Bsp. 1 | Bsp.2 | VB 1 | VB 2 |
|---|---|---|---|---|---|
| Dicke µm | | 58 | 62 | 59 | 60 |
| Dichte g/cm³ | | 0,53 | 0,52 | 0,52 | 0,53 |
| Glanz bei 20° | | 28,0 | 23,7 | 22,2 | 29,5 |
| Opazität % | | 86,3 | 87,2 | 87,3 | 86,7 |
| Weißgrad % | | 79,8 | 82,0 | 81,5 | 80,5 |
| Oberflächenspannung nN/m | Sofortwert | 39 | 39 | 39 | 39 |
| | Nach 3 Monaten | 38 | 38 | 38 | 35 |
| Einreißfestigkeit N/15mm | | 3,5 | 3,2 | 2,3 | 3,5 |

## Patentansprüche

1. Biaxial orientierte opake Polypropylenmehrschichtfolie aus einer Basisschicht und mindestens einer darauf angeordneten ersten Zwischenschicht und einer auf der ersten Zwischenschicht angeordneten ersten Deckschicht, **dadurch gekennzeichnet, daß** die erste Zwischenschicht im wesentlichen keine Vakuolen aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die Basisschicht vakuolenhaltig ist und eine Dichte im Bereich von 0,35 bis 0,6 g/cm³ aufweist und keine Zusatzstoffe enthält, deren Dichte über der Dichte des Polypropylens liegt und die Dichte der gesamten Folie im Bereich von 0,4 bis 0,7 g/cm³ liegt.

2. Biaxial orientierte opake Polypropylenmehrschichtfolie aus einer Basisschicht und mindestens einer darauf angeordneten ersten Zwischenschicht und einer auf der ersten Zwischenschicht angeordneten ersten Deckschicht, **dadurch gekennzeichnet, daß** die erste Zwischenschicht im wesentlichen keine Vakuolen aufweist und die erste Deckschicht mindestens 80 Gew.-% eines Propylen-Ethylen-Copolymeren enthält, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die Basisschicht vakuolenhaltig ist und eine Dichte im Bereich von 0,4 bis 0,9 g/cm³ aufweist und zusätzlich TiO₂ enthält und die Dichte der gesamten Folie im Bereich von 0,45 bis 0,95 g/cm³ liegt.

3. Folie nach Anspruch 1 oder 2, **dadurch gekennzeichnet, daß** das Propylen-Ethylen-Copolymere 1,5 bis 2,3 Gew.-% Ethylen enthält und einen Schmelzpunkt im Bereich von 150 bis 155 °C und eine Schmelzenthalpie von 90 bis 100 J/g hat.

4. Folie nach einem der Ansprüche 1 bis 3, **dadurch gekennzeichnet, daß** die Deckschicht zusätzlich Propylenhomopolymer, Propylencopolymer und/oder Propylenterpolymer enthält, wobei diese Polymeren von dem ersten Propylencopolymeren verschieden sind und der Propylengehalt dieser Polymeren mindesten 80Gew.-% beträgt, und der Anteil in der Deckschicht maximal 20 Gew.-%, vorzugsweise 2 bis 10 Gew.-% beträgt.

5. Folie nach einem der Ansprüche 1 bis 4, **dadurch gekennzeichnet, daß** die Dicke der ersten Deckschicht 0,5 bis 3 µm beträgt.

6. Folie nach einem der Ansprüche 1 bis 5, **dadurch gekennzeichnet, daß** die Oberfläche der ersten Deckschicht mittels Corona, Plasma, oder Flamme vorbehandelt ist.

7. Folie nach einem der Ansprüche 1 bis 6, **dadurch gekennzeichnet, daß** die Basisschicht aus Propylenhomopolymer aufgebaut ist 5 bis 30 Gew.-% vakuoleninitierende Füllstoffe enthält.

8. Folie nach einem der Ansprüche 1 bis 7, **dadurch gekennzeichnet, daß** die erste Zwischenschicht aus mindestens 50 Gew.-%, vorzugsweise 80 bis 90 Gew.-Propylenhomopolymer aufgebaut ist und zusätzlich 1 bis 15 Gew.-% TiO₂ enthält.

9. Folie nach einem der Ansprüche 1 bis 8, **dadurch gekennzeichnet, daß** auf der gegenüberliegenden Seite der Basisschicht eine zweite Deckschicht aufgebracht und die Folie vierschichtig ist.

10. Folie nach einem der Ansprüche 1 bis 9, **dadurch gekennzeichnet, daß** die zweite Deckschicht mindestens 80 bis <100 Gew.-% einer Polymer-Mischung enthält, wobei die Mischung aus Propylenpolymeren mit mindestens 80 Gew.-% Propyleneinheiten und eines Polyethylen besteht und wobei die Mischung 10 bis 50 Gew.-%, bezogen auf das Gewicht der Mischung, des Polyethylens enthält.

11. Folie nach einem der Ansprüche 1 bis 10, **dadurch gekennzeichnet, daß** die erste und/oder die zweite Deckschicht ein Antiblockmittel enthält.

12. Folie nach einem der Ansprüche 1 bis 11, **dadurch gekennzeichnet, daß** zwischen der Basisschicht der zweiten Deckschicht eine zweite Zwischenschicht angebracht ist und die Folie fünfschichtig ist.

13. Folie nach einem der Ansprüche 1 bis 12, **dadurch gekennzeichnet, daß** die zweite Zwischenschicht 5 bis 20 Gew.-% vakuoleninitierende Teilchen enthält.

14. Folie nach einem der Ansprüche bis 13, **dadurch gekennzeichnet, daß** die Basisschicht zusätzlich Antistatikum und Gleitmittel enthält.

15. Folie nach einem der Ansprüche 1 bis 14, **dadurch gekennzeichnet, daß** die erste und/oder die zweite Zwischenschicht Antistatikum und/oder Gleitmittel enthält.

16. Folie nach einem der Ansprüche 1 bis 15, **dadurch gekennzeichnet, daß** die erste und/oder die zweite Deckschicht zusätzlich Antiblockmittel und/oder Gleitmittel und/oder Antistatikum enthält.

17. Folie nach einem der Ansprüche 1 bis 16, **dadurch gekennzeichnet, daß** die erste Deckschicht mit einer nicht vollflächigen Bedruckung versehen wird.

18. Verwendung einer Folie nach einem der Ansprüche 1 bis 17 für die In-Mould Etikettierung beim Spritzgießen von Behältern aus thermoplastischem Kunststoff, vorzugsweise Polyethylen oder Polypropylen, **dadurch gekennzeichnet, daß** die der ersten Deckschicht gegenüberliegende Seite der Folie beim Etikettieren dem Behältnis zugewandt ist und die erste Deckschicht die Außenseite des Etiketts bildet.

## Claims

1. Biaxially-oriented opaque polypropylene multi-layer film, made from a base layer and at least one first intermediate layer arranged thereon and a first surface layer arranged on the first intermediate layer, **characterised in that** the first intermediate layer has essentially no vacuoles and the first surface layer contains at least 80 wt.% of a propylene/ethylene copolymer, which has an ethylene content of 1.2 to <2.8 wt.% and a propylene content of 97.2- 98.8 wt.%, and a melting point in the range 145 to 160°C and a fusion enthalpy of 80 to 110 J/g, and the base layer contains vacuoles and has a density in the range 0.35 to 0.6 g/cm³ and contains no additional materials the density of which exceeds the density of the polypropylene, and the density of the entire film lies in the range 0.4 to 0.7 g/cm³.

2. Biaxially-oriented opaque polypropylene multi-layer film, made from a base layer and at least one first intermediate layer arranged thereon and a first surface layer arranged on the first intermediate layer, **characterised in that** the first intermediate layer has essentially no vacuoles and the first surface layer contains at least 80 wt.% of a propylene/ethylene copolymer, which has an ethylene content of 1.2 to <2.8 wt.% and a propylene content of 97.2- 98.8 wt.%, and a melting point in the range 145 to 160°C and a fusion enthalpy of 80 to 110 J/g, and the base layer contains vacuoles and has a density in the range 0.4 to 0.9 g/cm3 and additionally contains TiO₂ and the density of the entire film lies in the range 0.45 to 0.95 g/cm3.

3. Film according to Claim 1 or 2, **characterised in that** the polypropylene/ethylene copolymer contains 1.5 to 2.3 wt.% ethylene and has a melting point in the range 150 to 155°C and a fusion enthalpy of 9 to 100 J/g.

4. Film according to one of Claims 1 to 3, **characterised in that** the surface layer additionally contains propylene homopolymer, propylene copolymer and/or propylene terpolymer, these polymers being different from the first propylene copolymers and the propylene content of these polymers being at least 80 wt.%, and the proportion in the surface layer being a maximum of 20 wt.%, preferably 2 to 10 wt.%.

5. Film according to one of Claims 1 to 4, **characterised in that** the thickness of the first surface layer is 0.5 to 3 µm.

6. Film according to one of Claims 1 to 5, **characterised in that** the surface of the first surface layer is pre-treated by means of corona, plasma or flame.

7. Film according to one of Claims 1 to 6, **characterised in that** the base layer is made up of propylene homopolymer and contains 5 to 30 wt.% vacuole-initiating fillers.

8. Film according to one of Claims 1 to 7, **characterised in that** the first intermediate layer is made of the least 50 wt.%, preferably 80 to 90 wt.% propylene homopolymer and additionally contains 1 to 15 wt.% TiO₂.

9. Film according to one of Claims 1 to 8, **characterised in that** a second surface layer is applied to the opposite side of the base layer, and that the film has four layers.

10. Film according to one of Claims 1 to 9, **characterised in that** the second surface layer contains at least 80 to <100 wt.% of a polymer mixture, the mixture consisting of polypropylene polymers with at least 80 wt.% propylene units and a polyethylene, and the mixture containing 10 to 50 wt.% of the polyethylene referred to the weight of the mixture.

11. Film according to one of Claims 1 to 10, **characterised in that** the first and/or second surface layer contains an anti-block medium.

12. Film according to one of Claims 1 to 11, **characterised in that** a second intermediate layer is applied between the base layer and the second surface layer, and that the film has five layers.

13. Film according to one of Claims 1 to 12, **characterised in that** the second intermediate layer contains 5 to 20 wt.% vacuole-initiating particles.

14. Film according to one of Claims 1 to 13, **characterised in that** the base layer additionally contains static inhibitor and slip additive.

15. Film according to one of Claims 1 to 14, **characterised in that** the first and/or second intermediate layer contains static inhibitor and/or slip additive.

16. Film according to one of Claims 1 to 15, **characterised in that** the first and/or second surface layer additionally contains anti-block medium and/or slip additive and/or static inhibitor.

17. Film according to one of Claims 1 to 16, **characterised in that** the first surface layer is provided with print, which does not extend over the whole surface.

18. Use of a film according to one of Claims 1 to 17 for in-mould labelling when injection-moulding containers made from thermoplastic synthetic material, preferably polyethylene or polypropylene, **characterised in that** the side of the film opposite the first surface layer faces the container during the labelling process, and that the first surface layer forms the outside of the label.

## Revendications

1. Film de polypropylène multicouche opaque orienté biaxialement présentant une couche de base et au moins une première couche intermédiaire positionnée au-dessus de cette couche de base ainsi qu'une première couche de couverture positionnée au-dessus de la première couche intermédiaire, **caractérisé en ce que** la première couche intermédiaire ne présente pour l'essentiel aucune vacuole et **en ce que** la première couche de couverture contient au moins 80 % en poids d'un copolymère d'éthylène-propylène, qui présente une teneur en éthylène comprise entre 1,2 et <2,8 % en poids et une teneur en propylène comprise entre 97,2 et 98,8 % en poids ainsi qu'un point de fusion situé dans une plage de température comprise entre 145 et 160°C et une enthalpie de fusion comprise entre 80 et 110 J/g ; la couche de base contient des vacuoles, sa densité oscille entre 0,35 et 0,6 g/cm³ et ne contient aucun additif, elle est supérieure à celle du polypropylène et la densité de l'ensemble du film se situe entre 0,4 et 0,7 g/cm³.

2. Film de polypropylène multicouche opaque orienté biaxialement présentant une couche de base et au moins une première couche intermédiaire positionnée au-dessus de cette couche de base ainsi qu'une première couche de couverture positionnée au-dessus de la première couche intermédiaire, **caractérisé en ce que** la première couche intermédiaire ne présente pour l'essentiel aucune vacuole et **en ce que** la première couche de couverture contient au moins 80 % en poids d'un copolymère d'éthylène-propylène, qui présente une teneur en éthylène comprise entre 1,2 et <2,8 % en poids et une teneur en propylène comprise entre 97,2 et 98,8 % en poids ainsi qu'un point de fusion situé dans une plage de température comprise entre 145 et 160°C et une enthalpie de fusion comprise entre 80 et 110 J/g ; la couche de base contient des vacuoles, se densité oscille entre 0,4 et 0,9 g/cm³ et contient par ailleurs du TiO2, et la densité de l'ensemble du film se situe entre 0,45 et 0,95 g/cm³.

3. Film selon l'une des revendications 1 ou 2, **caractérisé en ce que** le copolymère d'éthylène-propylène contient entre 1,5 et 2,3 % en poids d'éthylène et présente un point de fusion situé dans une plage de température comprise entre 150 et 155°C ainsi qu'une enthalpie de fusion comprise entre 90 et 100 J/g.

4. Film selon l'une des revendications 1 à 3, **caractérisé en ce que** la couche de couverture contient en outre un homopolymère de propylène, un copolymère de propylène et/ou un terpolymère de propylène ; ces polymères sont distincts du premier copolymère de propylène, leur teneur en propylène s'élève à au moins 80 % en poids et la part contenue dans la couche de couverture est de 20 % en poids au maximum, de préférence entre 2 et 10 % en poids.

5. Film selon l'une des revendications 1 à 4, **caractérisé en ce que** l'épaisseur de la première couche de couverture oscille entre 0,5 et 3 µm.

6. Film selon l'une des revendications 1 à 5, **caractérisé en ce que** la surface de la première couche de couverture est prétraitée par décharge à effet de couronne, au plasma ou à la flamme.

7. Film selon l'une des revendications 1 à 6, **caractérisé en ce que** la couche de base composée de l'homopolymère de propylène contient 5 à 30 % en poids de la charge à l'origine des vacuoles.

8. Film selon l'une des revendications 1 à 7, **caractérisé en ce que** la première couche intermédiaire se compose d'au moins 50 % (de préférence de 80 à 90 %) en poids de l'homopolymère de propylène et contient par ailleurs 1 à 15 % en poids de TiO2.

9. Film selon l'une des revendications 1 à 8, **caractérisé en ce que** le côté faisant face à la couche de base présente une seconde couche de couverture et le film se compose alors de quatre couches.

10. Film selon l'une des revendications 1 à 9, **caractérisé en ce que** la seconde couche de couverture contient au moins 80 à <100 % en poids d'un mélange polymérique composé de polymères de propylène constitués d'au moins 80 % en poids d'unités de propylène et d'un polyéthylène, ce mélange contenant 10 à 50 % en poids, eu égard au poids du mélange, de polyéthylène.

11. Film selon l'une des revendications 1 à 10, **caractérisé en ce que** la première et/ou la seconde couche de couverture contient un agent antibloquant.

12. Film selon l'une des revendications 1 à 11, **caractérisé en ce qu'**une seconde couche intermédiaire est insérée entre la couche de base de la seconde couche de couverture et le film se compose alors de cinq couches.

13. Film selon l'une des revendications 1 à 12, **caractérisé en ce que** la seconde couche intermédiaire contient de 5 à 20 % en poids de particules à l'origine des vacuoles.

14. Film selon l'une des revendications 1 à 13, **caractérisé en ce que** la couche de base contient par ailleurs un matériau antistatique et un agent lubrifiant.

15. Film selon l'une des revendications 1 à 14, **caractérisé en ce que** la première et/ou la seconde couche intermédiaire contient un matériau antistatique et/ou un agent lubrifiant.

16. Film selon l'une des revendications 1 à 15, **caractérisé en ce que** la première et/ou la seconde couche de couverture contient par ailleurs un agent antibloquant et/ou un agent lubrifiant et/ou un matériau antistatique.

17. Film selon l'une des revendications 1 à 16, **caractérisé en ce que** la première couche de couverture est dotée d'une inscription ne couvrant pas la totalité de sa surface.

18. Utilisation d'un film selon l'une des revendications 1 à 17, destiné à l'étiquetage dans le moule dans le cadre du moulage par injection de conteneurs thermoplastiques, préférablement composés de polyéthylène ou de polypropylène, **caractérisé en ce que** le côté du film faisant face à la première couche de couverture est tourné vers le conteneur au moment de l'étiquetage et **en ce que** la première couche de couverture forme le côté extérieur de l'étiquette.
